# EUROPEAN PATENT APPLICATION

(11) **EP 4 730 717 A1**
(43) Date of publication of application: **22.04.2026**
(21) Application number: 25208842.2
(22) Date of filing: 15.10.2025
(51) Int. Cl.: H04L 12/18

(54) **SYSTEM AND METHOD FOR DYNAMIC INTEGRATION OF ASYNCHRONOUS PARTICIPANT CONTRIBUTIONS INTO REAL-TIME COLLABORATIVE ENVIRONMENTS USING PLACEMENT TECHNIQUE**

(30) Priority: 15.10.2024 US 202418916519
(71) Applicant: Mitel Networks Corporation, Ottawa, Ontario K2K 3K1 (CA)
(72) Inventor: Sahoo, Subhasish, 560100 Bangalore (IN); Naidoo, Logendra, Ottawa, K1S 0W8 (CA)
(74) Representative: McDougall, James

(57) **Abstract**

A computerized conferencing system is configured to integrate a live contribution from a non-conference participant during a conference. The system includes a conference server, a plurality of participant devices, a topic identifier, and a natural language processor (NLP). The conference server senses a conference invitation that includes conference topics. If a participant declines participation in the conference the participant's response to the conference invitation includes (a) the reason for the non-conference participant declining the conference invitation, and (b) a voice, video, image, or text input from the non-conference participant.

## Description

### Background

Hectic work schedules are common. Many times, people are not able to join an online meeting. Even if a worker cannot join a meeting, others may still require her/his views/thoughts for the meeting. Executives are often not able to join a meeting because the meeting is not essential as compared to other business commitments. Regardless, sometimes a person's view on a topic is required in advance of, during, or even after the meeting. So basically, people cannot provide live updates or their thoughts on a meeting if they cannot attend.

Prior attempts to address this problem have fallen short. For example, meeting non-attendees may provide input by declining the meeting invitation and including their comments in an email. This approach, which is essentially an offline update, suffers from the emails potentially being overlooked by meeting participants. There is currently no provision for sharing audio, visual, or written comments automatically during a meeting topic. Non-conference participants wishing to do so must record their message separately and then attach or link to the recording to an email. This process is cumbersome and lacks a systematic way to archive and retrieve these communications during the proper time in a meeting, which potentially leads to their eventual disappearance in a sea of email correspondence.

The earlier solution had no live update during the meeting, no option for voice or video updates, and no way to let meeting participants know the reason why he/she is not able to participate in the meeting.

A meeting apparatus may share updates from a meeting, but traditionally such updates require the participants to be present. Some meeting applications can be run remotely, however virtual attendance is difficult because an in-meeting agent is required to relay contributions for participants who cannot attend the meeting.

This disclosure is of systems and methods to permit the submission of a non-attendee's contribution(s) in advance, through voice, video, and/or text, and the inputs are integrated into the live, in-progress meeting at the relevant moments.

### Summary

A first aspect of this disclosure provides a computerized conferencing system configured to integrate a live contribution from a non-conference participant during a conference, wherein the system comprises: a conference server configured to send a conference invitation to a plurality of participant devices, wherein the conference invitation includes conference topics, wherein each of the plurality of participant devices is assigned to a unique participant and is configured to receive the conference invitation from the conference server and send a response thereto, and wherein if the response declines participation in the conference, the response includes (a) a reason for the non-conference participant declining the conference invitation, and (b) a voice, video, image, or text input from the non-conference participant related to the conference; a topic identifier configured to identify a conference topic during the conference; an input database configured to store the reason for declining the conference invitation by the non-conference participant and the non-conference participant's input, wherein the input database is in communication with the conference server and with the topic identifier; and a natural language processor (NLP) in communication with the conference server and the topic identifier, wherein the topic identifier determines a topic presented in the conference based on an NLP identification of thematic elements in a conference participant's speech, a host's speech, and/or conference audio; wherein when a topic is identified by the topic identifier to which the input pertains, the input is retrieved from the input database by the conference server and presented with the topic.

The non-conference participant's decline of the conference invitation and reason for the decline may be immediately communicated to each of the other participant devices prior to the conference.

The computerized conferencing system may further include a bot server in communication with the conference server and with the input database and that is configured to generate a bot in the conference to present the input if the input is audio or video.

The computerized conferencing system may further include a deep fake server in communication with the bot server, wherein the deep fake server stores the voice or image of the non-conference participant and the bot server is configured to retrieve the voice or image of the non-conference participant and present the input using the voice and/or image of the non-conference participant.

The computerized conferencing system may further include a host device in communication with the conference server and using the host device, the conference host controls when and if the input is presented during the conference.

The conference server may be configured to annotate or line the input to the topic of the conference to which the input pertains so the input is integrated into other materials related to the topic when the topic is presented rather than the input being presented separately.

The conference participants may provide feedback on the input when it is presented, and the feedback is stored in the input database where it is accessible by the non-conference participant via a participant device.

The non-conference participant may receive an alert of the feedback on the participant device and, using the participant device, may respond to a participant device of the conference participant who provided the feedback or join the conference to provide a response to the feedback.

One or both of the NLP and the topic identifier may be further configured to identify synonymous and semantically similar (a) words, and (b) phrases to words and phrases included in the participants' speech, the host's speech, or conference audio to assist in identifying the topic.

The computerized conferencing system may comprise a predictive module for dynamically adjusting the NLP identifications and the topic identifier in real-time, based on predictive analytics and an evolving flow of the participants' speech, the host's speech, or conference audio, to further enhance topic detection during the conference.

The computerized conferencing system may further include a filter in communication with the conference server and the filter is configured to filter text or audio in the input by the text or audio (a) being tokenized into individual words or phrases, (b) having common stop words removed, (c) parsing text, and (d) fragmenting sentences, and the filtered text or audio is compared to the participant's speech, the host's speech, or the conference audio during the conference.

A second aspect of this disclosure provides a computerized conferencing method for permitting a non-conference participant to provide a live contribution to a conference topic during a conference, the computerized conferencing method comprising the following steps: a conference server sending a conference invitation to a plurality of participant devices, wherein the conference invitation includes conference topics, and wherein each of the plurality of participant devices is assigned to a unique participant; using a participant device, one of the participants sending a response to the conference server declining the conference invitation, wherein the response includes (a) a reason for the one of the participants declining the conference invitation, and (b) a voice, video, image, or text input regarding the conference; an input database storing the reason for the one of the participants declining the conference invitation and the input, wherein the input database is in communication with the conference server and with a topic identifier; using an NLP, determining one or more topics presented during a conference by NLP identifying words and phrases in a conference participant's speech, a host's speech, or conference audio, and communicating with the input database to access the input and compare the input to the identified words and phrases; and based on a comparison, a topic identifier matching a conference topic to the input and the conference server accessing the input and presenting it during the conference topic.

The computerized conferencing method may comprise (a) the NLP processes conference audio to tokenize it into individual words and phrases, wherein words are lemmatized for semantic consistency, and (b) the conference server processes conference text to parse and fragment sentences for analysis, and (c) the processed conference audio and processed text are compared to the input to determine matches and identify a topic that matches the input.

The computerized conferencing method may further include a camera in communication with the conference server and the conference server is also configured to analyze video and images generated during the conference and compare them to video and images in the input database to help identify a conference topic related to the input.

The topic identifier may further identify the topic based upon (a) an identity of a person speaking, (b) keywords identified by the NLP, (c) a predetermined timeframe within the conference for the topic, and (d) a conference image.

The conference server may access the input database and retrieve and present stored input when a conference topic having a predetermined score criteria is identified by the topic identifier.

The conference topic and the input may be stored together in the input database when the conference topic is concluded and the conference topic and input can be accessed by non-conference participants and by conference participants.

A third aspect of this disclosure provides a computerized conferencing device for presenting live content from a non-conference participant during a conference, wherein the device comprises: a tangible, non-transitory memory configured to communicate with a processor of the computerized conferencing device, wherein the tangible, non-transitory memory comprises instructions stored thereon that, in response to execution by the processor, cause the device to: send, via a conference server, a conference invitation to a plurality of participant devices, wherein the conference invitation includes conference topics, and wherein each of the participant devices is assigned to a unique participant; a non-conference participant, using a participant device, sending a response to the conference server declining a conference invitation, wherein the response includes (a) a reason for declining the conference invitation, and (b) input related to the conference, wherein the input comprises of one or more of audio, visual, images, and text; the reason for declining the conference and the input being stored in an input database; identify, utilizing an NLP in communication with a topic identifier and the conference server, a topic in a conference presented by the conference server based on thematic elements in a conference participant's speech, a host's speech, or conference audio; the topic identifier comparing the topic to the input in the input database to determine whether there is a match; and if there is a match, utilizing the conference server, retrieving input from the input database when the topic related to the input is identified and providing the input during presentation of the topic.

The tangible, non-transitory memory instructions when executed may further cause the device to: using a topic scoring engine in communication with the topic identifier, identifying a topic relevant to the input based on a predetermined score criteria saved in the topic scoring engine, wherein the score criteria is based on a number of matches of words and phrases in a selected segment of conference audio, participant speech, host speech, and conference video, to audio, text, video, and images in a selected segment of the input; and the conference server either (a) presenting the input once during the conference when the predetermined score is reached, or (b) presenting the input during the conference each time the predetermined score is reached.

A host may communicate the predetermined score criteria through a conference host device to the conference server, which transmits the predetermined score criteria to the topic identifier.

### Brief Description of the Drawings

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements and wherein:
FIG. 1 is a block diagram of a system according to aspects of this disclosure.
FIGS. 2 and 3 are a block diagram of a method for matching a non-conference participant's input with a meeting topic and providing the input during the topic.
FIG. 4 is a method for providing input from a non-conference participant during a meeting topic.

It will be appreciated that elements in the figures are illustrated for simplicity and clarity and have not necessarily been drawn to scale. For example, the dimensions of some of the elements in the figures may be exaggerated relative to other elements to help to improve understanding of illustrated embodiments of the present invention.

### Detailed Description

The description of exemplary embodiments of the present invention provided herein is merely exemplary and is intended for purposes of illustration only; the following description is not intended to limit the scope of the invention as claimed. Moreover, recitation of multiple embodiments having stated features is not intended to exclude other embodiments having additional features or other embodiments incorporating different combinations of the stated features.

It must also be noted that, the term "exemplary" is used in the sense of "example," rather than "ideal."

It must also be noted that, as used in the specification and the appended claims, the singular forms "a," "an" and "the" include plural referents unless the context clearly dictates otherwise.

By "comprising" or "containing" or "including" it is meant that at least the named compound, element, particle, or method step is present in the composition or article or method, but does not exclude the presence of other compounds, materials, particles, method steps, even if the other such compounds, material, particles, method steps have the same function as what is named.

Relative terms, such as "about," "substantially," or "approximately" are used to include small variations with specific numerical values (e.g., +/- x%,), as well as including the situation of no variation (+/-0%). In various embodiments, the numerical value x is less than or equal to 10 - e.g., less than or equal to 5, to 2, to 1, or smaller.

As used herein, "database" refers to any suitable database for storing information, electronic files or code to be utilized to practice embodiments of this disclosure. As used herein, "server" refers to any suitable server, computer or computing device for performing functions utilized to practice embodiments of this disclosure.

As used herein, "software" refers to programs or other operating information utilized by a processor or other computing hardware.

As used herein, "meeting" means a meeting or conference such as telephonic, video, audio/video, in-person, a hybrid of any of the preceding, and any type of meeting involving multiple participants.

This disclosure provides a system that integrates a live contribution from a non-conference participant during a conference. As used herein, the term, "non-conference participant" refers to a user or person or other such individual who is unable to or otherwise declines to participate in a meeting, an event, a conference, and/or the like. The system can include a conference server configured to send a conference invitation to a plurality of participant devices, wherein the conference invitation includes conference topics, wherein each of the plurality of participant devices is assigned to a unique participant and is configured to receive the conference invitation from the conference server and send a response thereto, and wherein if the response declines participation in the conference, the response includes (a) a reason for the non-conference participant declining the conference invitation, and (b) a voice, video, image, or text input from the non-conference participant related to the conference. A topic identifier can be included to identify a conference topic during the conference. An input database can store the reason for declining the conference invitation by the non-conference participant and the non-conference participant's input, wherein the input database is in communication with the conference server and with the topic identifier. A natural language processor (NLP) can be in communication with the conference server and the topic identifier, wherein the topic identifier determines a topic presented in the conference based on an NLP identification of thematic elements in a conference participant's speech, a host's speech, and/or conference audio. In some aspects, when a topic is identified by the topic identifier to which the input pertains, the input is retrieved from the input database by the conference server and presented with the topic.

This disclosure also provides a computerized conferencing method for permitting a non-conference participant to provide a live contribution to a conference topic during a conference. The method can include a conference server sending a conference invitation to a plurality of participant devices, wherein the conference invitation includes conference topics, and wherein each of the plurality of participant devices is assigned to a unique participant; using a participant device, one of the participants sending a response to the conference server declining the conference invitation, wherein the response includes (a) a reason for the one of the participants declining the conference invitation, and (b) a voice, video, image, or text input regarding the conference; an input database storing the reason for the one of the participants declining the conference invitation and the input, wherein the input database is in communication with the conference server and with a topic identifier; using an NLP, determining one or more topics presented during a conference by NLP identifying words and phrases in a conference participant's speech, a host's speech, or conference audio, and communicating with the input database to access the input and compare the input to the identified words and phrases; and based on a comparison, a topic identifier matching a conference topic to the input and the conference server accessing the input and presenting it during the conference topic.

This disclosure also provides a computerized conferencing method for permitting a non-conference participant to provide a live contribution to a conference topic during a conference. The method can include a conference server sending a conference invitation to a plurality of participant devices, wherein the conference invitation includes conference topics, and wherein each of the plurality of participant devices is assigned to a unique participant; using a participant device, one of the participants sending a response to the conference server declining the conference invitation, wherein the response includes (a) a reason for the one of the participants declining the conference invitation, and (b) a voice, video, image, or text input regarding the conference; an input database storing the reason for the one of the participants declining the conference invitation and the input, wherein the input database is in communication with the conference server and with a topic identifier; using an NLP, determining one or more topics presented during a conference by NLP identifying words and phrases in a conference participant's speech, a host's speech, or conference audio, and communicating with the input database to access the input and compare the input to the identified words and phrases; and based on a comparison, a topic identifier matching a conference topic to the input and the conference server accessing the input and presenting it during the conference topic.

As used herein, the terms application, module, analyzer, engine, and the like can refer to computer program instructions, encoded on computer storage medium for execution by, or to control the operation of, data processing apparatus. Alternatively, or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of the substrates and devices. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., solid-state memory that forms part of a device, disks, or other storage devices).

As used herein, "tangible, non-transitory memory" refers to computer program instructions, encoded on computer storage medium for execution by, or to control the operation of, data processing apparatus. Alternatively, or additionally, the program instructions can be encoded on an artificially-generated propagated signal, e.g., a machine-generated electrical, optical, or electromagnetic signal, which is generated to encode information for transmission to a suitable receiver apparatus for execution by a data processing apparatus. A computer storage medium can be, or be included in, a computer-readable storage device, a computer-readable storage substrate, a random or serial access memory array or device, or a combination of one or more of the substrates and devices. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., solid-state memory that forms part of a device, disks, or other storage devices). In accordance with examples of the disclosure, a non-transient computer readable medium containing program can perform functions of one or more methods, modules, engines and/or other system components as described herein. The computer storage medium can also be, or be included in, random access memory (RAM), read-only memory (ROM), electronically erasable programmable ROM (EEPROM), flash memory or other memory technology, compact disc ROM (CD-ROM), digital versatile disks (DVD) or other optical storage, magnetic cassettes, magnetic tape, magnetic disk storage or other magnetic storage devices, or any other tangible, physical medium which can be used to store computer readable information.

As used herein, the terms "component," "engine," "model," "module," "system," "server," "processor," "memory," and the like are intended to include one or more computer-related units, such as but not limited to hardware, firmware, a combination of hardware and software, software, or software in execution. For example, a component may be, but is not limited to being, a process running on a processor, an object, an executable, a thread of execution, a program, and/or a computer. By way of illustration, both an application running on a computing device and the computing device can be a component. One or more components can reside within a process and/or thread of execution and a component may be localized on one computer and/or distributed between two or more computers. In addition, these components can execute from various computer readable media having various data structures stored thereon. The components may communicate by way of local and/or remote processes such as in accordance with a signal having one or more data packets, such as data from one component interacting with another component in a local system, distributed system, and/or across a network such as the Internet with other systems by way of the signal.

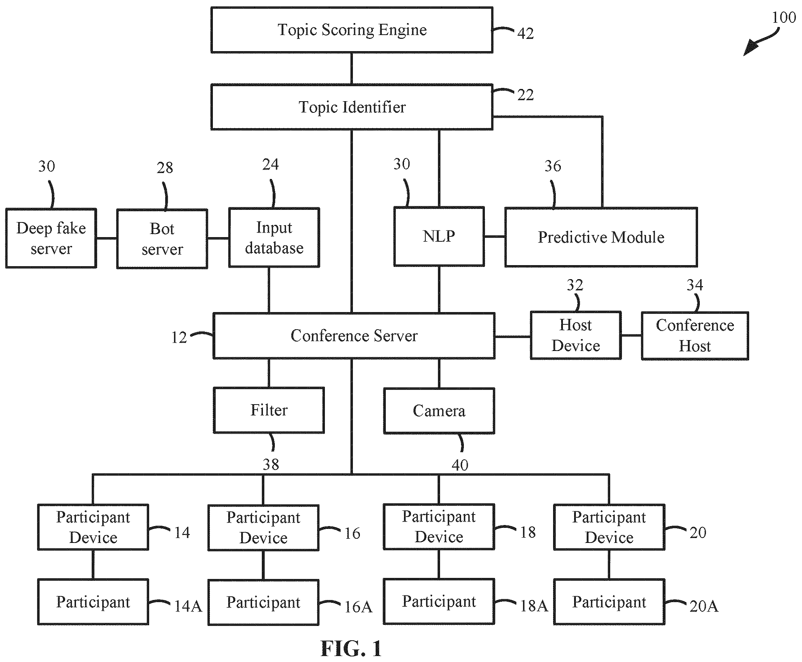

Turing to the Figures, wherein the purpose is to describe embodiments of this disclosure and not to limit the scope of the claims, FIG. 1 shows an exemplary system 100 for allowing participation during a meeting by a non-conference participant. System 100 can include a conference server 12 and a conference host device 32 that is operated by a conference host 34. Conference server 12 can be any suitable computing device, such as a computer, processor, router, or server. Conference server 12 can include software to provide instructions to the hardware of conference server 12 and/or may include a tangible, non-transitory memory, which includes computer program instructions that help control the operation of conference server 12. Conference server 12 can be configured to send a conference invitation to a plurality of participant devices 14, 16, 18, and 20. Each participant device can be unique to a respective participant 14A, 16A, 18A, and 20A. The conference invitation can include conference topics and devices 14, 16, 18, and 20 can be configured to receive the conference invitation from the conference server 12 and send a response thereto. Although four participant devices and participants are shown, there could be any number of participant devices and participants. Conference server 12 is configured to receive responses to the conference invitation from each of the participant devices 14, 16, 18, and 20 and to present the conference. In some aspects, if a response of a participant is declining participation in the conference, the response can include a reason for the non-conference participant declining the conference invitation, and a voice, video, image, and/or text input from the non-conference participant related to the conference. The non-conference participant's declining of the conference invitation and reason for the decline can be immediately communicated to each of the other participant devices 14, 16, 18, and 20 prior to the conference. In some aspects, once the decline provides an update as to "the reason behind not joining", and any thoughts related to the agenda (e.g., in text or voice), topic scoring engine 42, topic identifier 22, and/or conference server 12 can process further participant input in real time.

Host device 32 can be any electronic device that is assigned to the conference host 34 and that is capable of communicating with conference server 12 in the manner set forth herein, and can be a computer, smart phone, pad, or other suitable device. Conference host device 32 can include an interface, which can be any suitable interface, such as a keyboard, touch screen, audio input, mouse, or other, for the conference host to send conference information, instructions, inquiries, comments, or other communications to conference server 12, and to receive communications from conference server 12. In some aspects, using host device 32, the conference host 34 can control when and if the input is presented during the conference. In some aspects, conference server 12 can annotate or line the input, including but not limited to audio, text, and video, to one or more topics of the conference to which the input pertains so the input is integrated into other materials related to the topic when the topic is presented rather than the input being presented separately.

In some aspects, conference server 12 can annotate or line insights from the input and link them to agenda items. In some aspects, the input can be automatically shared by conference server 12, including whether in voice or text, in a meeting chat at a relevant time (e.g., a time determined by any overlap in a relationship between an agenda topic and the input). In some aspects, participants in the meeting can respond to non-conference participant contributions. If a meeting participant sees a non-conference participant contribution, then an offline non-conference participant can receive a notification (e.g., from conference server 12).

In some aspects, conference server 12 is in communication with a topic identifier 22 and a topic scoring engine 42. Topic identifier 22 can be configured to identify a conference topic during the conference. The topic scoring engine 42 may be resident on the topic identifier 22 or conference server 12, although topic scoring engine 42 could be a separate device or resident on a separate device. Topic scoring engine 42 can be any suitable computing device, such as a computer, processor, router, or server. In some aspects, topic scoring engine 42 with topic identifier 22 can identify a topic relevant to input based on a predetermined score criteria saved in topic scoring engine 42. In some aspects, score criteria can be based at least in part on a number of matches of words and phrases in a selected segment of conference audio, participant speech, host speech, and/or conference video, to audio, text, video, and/or images in a selected segment of the input. Conference server 12 can present the input once during the conference when the predetermined score is reached. Conference server 12 can also or alternatively present the input during the conference each time the predetermined score is reached. In some aspects, host 34 can communicate predetermined score criteria through conference host device 32 to conference server 12 that transmits the predetermined score criteria to topic identifier 22.

A natural language processor (NLP) (30) can be in communication with conference server 12 and topic identifier 22. NLP 30 can be a separate component or part of conference server 12 or of any other suitable part of system 100. In some aspects, NLP 30 can utilize preprocessing, parsing, sentence fragmentation, stop words, lemmatization, tokenization, and/or the like. By way of example and without limitation, if an agenda is a 'plan', sometimes meetings go according to an unstructured, planned rollout; yet the agenda can still be relevant just not in the prescribed order. NLP 30 can analyze the speech or communication of each participant, each non-conference participant, and/or the conference host/facilitator and based on the analysis and in connection with topic identifier 22, determine a topic (e.g., a topic presented in the conference) based on an NLP identification of thematic elements in a conference participant's speech, a host's speech, and/or conference audio. In some aspects, one or both of NLP 30 and topic identifier 22 can identify synonymous and semantically similar (a) words, and (b) phrases to words and phrases included in the participants' speech, the host's speech, or conference audio to assist in identifying the topic. Topic identifier 22 can also identify the topic based upon (a) an identity of a person speaking, (b) keywords identified by NLP 30, (c) a predetermined timeframe within the conference for the topic, and/or (d) a conference image.

In some aspects, NLP 30 can process conference audio to tokenize it into individual words and phrases so that words are lemmatized for semantic consistency. Conference server 12 can process conference text to parse and fragment sentences for analysis. Processed conference audio and processed text can be compared to the input to determine matches and identify a topic that matches the input.

System 100 can also include a predictive module 36 in communication with topic identifier 22 and NLP 30. Predictive module 36 can dynamically adjust NLP identifications and the topic identifier 22 in real-time, based on predictive analytics and an evolving flow of the participants' speech, the host's speech, and/or conference audio, further enhance topic detection during the conference.

In some aspects, predictive module 36 can be or include one or more machine learning models. In some aspects, a machine learning model of this example can be generated based on applying respective training input with, optionally, the associated information paired with the output information as applied by a machine learning algorithm(s). The machine learning algorithm(s) may accept the foregoing aspects as training input, the output information and implement training using one or more techniques. For example, the machine learning models may be trained in one or more Convolutional Neural Networks (CNN), CNN with multiple-instance learning or multi-label multiple instance learning, Recurrent Neural Networks (RNN), Long-short term memory RNN (LSTM), Gated Recurrent Unit RNN (GRU), graph convolution networks, or the like or a combination thereof.

In some aspects, convolutional neural networks can directly learn the features, such as agenda features, topic features, meeting features, participant features, and any other feature representations necessary for discriminating among characteristics, which can work extremely well when there are large amounts of data to train on, whereas the other methods can be used with either traditional computer vision features, e.g., SURF or SIFT, or with learned embeddings (e.g., descriptors) produced by a trained convolutional neural network, which can yield advantages when there are only small amounts of data to train on. The trained machine learning models of this disclosure may be configured to provide quality designations for meeting data disclosed herein, including audio, text, video and other data thereof. Computerized methods of this disclosure that use machine learning models can include, but are not limited to, statistical analysis, autonomous or machine learning, and AI. AI may include, but is not limited to, deep learning, neural networks, classifications, clustering, and regression algorithms.

System 100 can include a filter 38 in communication with conference server 12. Filter 38 can filter text and/or audio in the input by the text and/or audio (a) being tokenized into individual words or phrases, (b) having common stop words removed, (c) parsing text, and/or (d) fragmenting sentences. In some aspects, the filtered text or audio by filter 38 can be compared to the participant's speech, the host's speech, and/or the conference audio during the conference.

An input database 24 may be resident on conference server 12, topic identifier 22, or topic scoring engine 42, or any other suitable device. Input database 24 can store one or more reasons, including any attributes thereof, for declining the conference invitation by a non-conference participant and the non-conference participant's input. Input database 24 can be arranged in communication with conference server 12, topic identifier 22, as well as NLP 30. In some aspects, when a topic is identified by topic identifier 22 to which the input pertains, the input is retrieved from input database 24 by conference server 12 and presented with the topic. In some aspects, conference server 12 can access input database 24 and retrieves and present stored input when a conference topic has a predetermined score criteria identified by topic identifier 22. The conference topic and input can be stored together in input database 24 when the conference topic is concluded. In some aspects, the conference topic and input can be accessed by non-conference participants and by conference participants.

In some aspects, participants 14A, 16A, 18A, and 20A can provide feedback on input when the input is presented, and the feedback can be stored in input database 24 where it is accessible by the non-conference participant via a participant device. In some aspects, a non-conference participant can receive an alert of the feedback on one or more participant devices 14, 16, 18, and 20 and, using a respective participant device, may respond to the participant device (e.g., device 14, 16, 18, or 20) of the conference participant (e.g., one of participants 14A, 16A, 18A, and 20A) who provided the feedback or join the conference to provide a response to the feedback.

In some aspects, participant devices 14, 16, 18, and 20 may communicate directly or indirectly with topic scoring engine 42. Conference server 12 may also be configured to automatically check a calendar on each of participant devices 14, 16, 18, and 20 to determine a participant's availability for a conference invitation. Each participant device 14, 16, 18, and 20 may also be configured to automatically send updates to the conference server 12, topic identifier 22, and/or topic scoring engine 42 regarding one or more of topic attributes.

System 100 can also include a camera 40 in communication with conference server 12. In this respect, conference server 12 can be configured to analyze video and images generated during the conference (e.g., video and/or images generated or otherwise captured by camera 40) and compare them to video and images in input database 24 to facilitate identifying a conference topic related to the input.

System 100 can include a bot server 28 in communication with conference server 12 and input database 24. Bot server 28 can generate a bot in the conference to present the input if the input is audio and/or video. System 100 can also include a deep fake server 30 in communication with bot server 28. Deep fake server 30 can store voice or image, including any attributes thereof, of the non-conference participant. Bot server 28 can retrieve the voice and/or image of the non-conference participant. Bot server 28 can present the input using the voice and/or image of the non-conference participant.

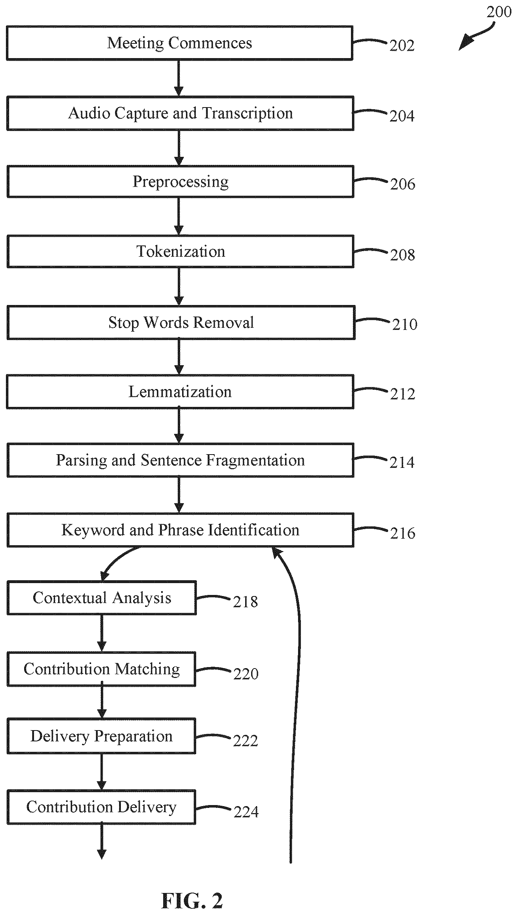

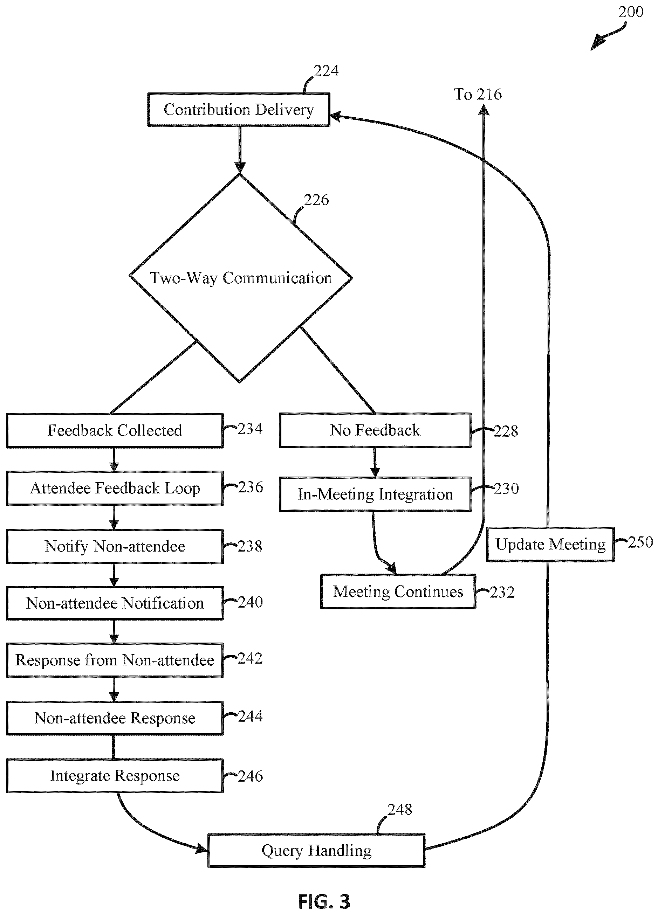

FIGS. 2 and 3 are a block diagram of a method 200 for matching a non-conference participant's input with a meeting topic and providing the input during the topic. Prior to the first depicted step of method 200, it is contemplated that a meeting is planned and an agenda can be shared in advance. Here, a non-conference participant user can notify that they are unable to participate in the meeting (e.g., sending a response to server 12). The system (e.g., system 100) can receive the response and input facility can presented to the non-conference participant user so that the non-conference participant can then receive voice snippets and/or text related to the meeting. In some aspects, the non-conference participant user can prepare and submit any meeting contribution in advance of the meeting (e.g., in response to one or more agenda items). Submission of the meeting contribution can be done using voice, text, and/or other user generated media.

At step 202, the meeting in question can commence and without participation by the non-conference participant user. At step 204, the system can begin oversight services of the meeting, including capture of audio and any related transcription (e.g., NLP 30 can generate a transcription of the discussion). In some aspects of step 204, oversight service(s) can be active using NLP 30 that includes or otherwise incorporates Stanford NLP. At step 206, the transcribed text undergoes preprocessing for clarity and standardization. At step 208, the preprocessed text is tokenized (e.g., by NLP 30) into individual words or phrases for detailed analysis. One nonlimiting example of contemplated pre-processing is described at https://nlp.stanford.edu/IR-book/html/htmledition/tokenization-1.html. At step 210, common stop words (e.g., "a", "an", "the") can be removed to focus on meaningful content. At step 212, non-common stop words are lemmatized to their base form (e.g., "running", "ran", and "runs" become their base word of "run") to ensure semantic consistency. *See* https://nlp.stanford.edu/IR-book/html/htmledition/stemming-

### and-lemmatization-1.html.

At step 214, text can be parsed and sentences can be fragmented for in-depth analysis. At step 216, dynamic topic identification can be performed through real-time clustering or topic modeling using at least a machine learning model. In some examples, "clustering" is described in Duda and Hart, Pattern Classification and Scene Analysis, 1973, John Wiley & Sons, Inc., New York, (see, for example pages 211-256) which is hereby incorporated by reference in its entirety. "Clustering" can include finding natural groupings in a data set, or a collection information elements. To identify natural groupings, first, a way to measure similarity (and/or dissimilarity) between two elements is determined. This similarity measure is used to ensure that the elements in one cluster are more like one another than they are to elements in other clusters. Second, a mechanism for partitioning the data into clusters using the similarity measure is determined. One way to begin clustering is to define a distance function and to compute the matrix of distances between all pairs of elements in a data set. If distance is a good measure of similarity, then the distance between elements in the same cluster will be significantly less than the distance between elements in different clusters. In some aspects, clustering does not require the use of a distance metric. For example, a nonmetric similarity function s(x, x') can be used to compare two vectors x and x'. More information on clustering techniques can be found in Kaufman and Rousseeuw, 1990, Finding Groups in Data: An Introduction to Cluster Analysis, Wiley, New York, N.Y.; Everitt, 1993, Cluster analysis (Third Edition), Wiley, New York, N.Y.; and Backer, 1995, Computer Assisted Reasoning in Cluster Analysis, Prentice Hall, Upper Saddle River, N.J. In embodiments, clustering of step 216 can include clustering a plurality of vectors including hierarchical clustering (agglomerative clustering using nearest-neighbor algorithm, farthest-neighbor algorithm, the average linkage algorithm, the centroid algorithm, or the sum-of-squares algorithm), k-means clustering, fuzzy k-means clustering algorithm, and/or Jarvis-Patrick clustering. In embodiments, k-means clustering is used. In some examples, step 216 can be performed regardless of initial agenda.

At step 218, contextual analysis can be performed wherein context is monitored (e.g., continuously) for shifts or new themes or other detected salient elements not listed in the agenda. At step 220, semantic matching can be used to align non-conference participant contributions with current discussion topics (e.g., based on context rather than exact keywords). In some aspects, method 200 can include retrieving any corresponding absent participant contribution when emergent topics match and/or evaluating relevance of any contribution in real-time before delivery. At step 222, the contribution can be prepared for delivery and at step 224, the contribution can be delivered at the appropriate moment during the discussion, including being formatted as needed.

Continuing to FIG. 3, at step 226, participants in the meeting can engage in two-way communication comment or ask a question based on non-conference participant contributions and the respective non-conference participant can then choose to respond if they are available.

At step 228, if the non-conference participant provides no feedback, then in step 230 non-conference participant contributions can be integrated in the meeting so that in step 232 the meeting can continue back to step 216.

At step 234, if the non-conference participant provides feedback, then that feedback is collected at in step 236 fed into a conference participant feedback loop. At step 238, non-conference participant(s) can be notified of the collected feedback (e.g., via a non-conference participant notification at step 240). At step 242, a response from the non-conference participant is generated and at step 244 the non-conference participant response is received. At step 246, the non-conference participant response can be integrated in the meeting so that in step 248 the query handling related to the non-conference participant response can in step 250 cause the meeting to be updated and revert back to repeat step 224.

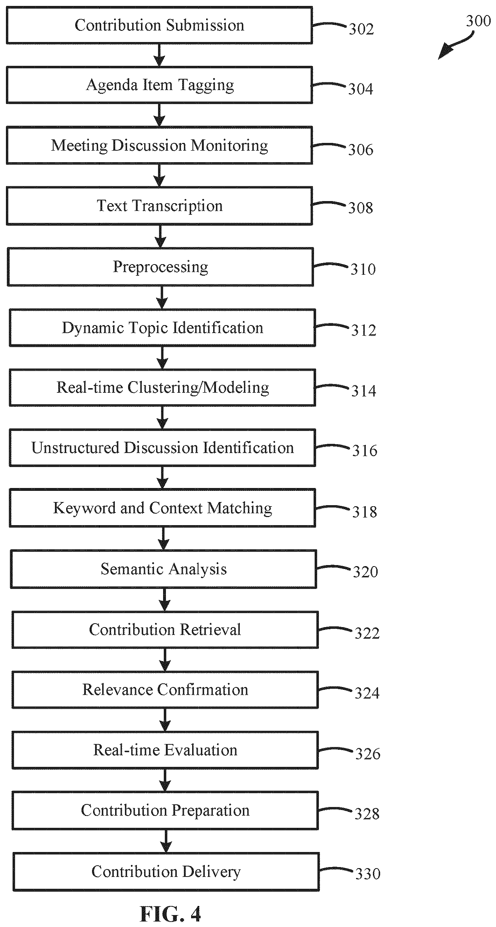

FIG. 4 is a block diagram of a method 300 for matching input with structured or unstructured agenda. At step 302, non-conference participant contribution is submitted. At step 304, the submission is analyzed and tagged by the conference server 12 according to one or more items from an agenda for the meeting. At step 306, the meeting discussion is monitored by the system and at step 308, text of the meeting discussion can be transcribed (e.g., NLP 30 can generate a transcription of the discussion). At step 310, the transcribed text undergoes preprocessing for clarity and standardization. At step 312, dynamic topic identification can be performed, for example but without limitation and regardless of initial agenda. At step 314, real-time clustering and/or topic modeling to facilitate the dynamic topic identification of step 312. At step 316, unstructured discussion identification is performed and at step 318 keyword and contextual matching is performed (e.g., where context can be monitored for shifts or new themes or other detected salient elements not listed in the agenda and semantic matching at step 320 can be used to align non-conference participant contributions with discussion topics). At step 322, contribution(s) can be retrieved with respect to any corresponding absent participant contribution and at step 324 relevance can be confirmed via real-time evaluation (step 326). At step 328, the contribution can be prepared for delivery and at step 330, the contribution can be delivered, including but not limited to at the appropriate moment during the discussion. In some aspects of step 330, the delivered contribution can be formatted as needed.

According to certain embodiments, systems and methods of this disclosure can be included in user-facing front-end including software, firmware, and/or hardware to integrate a live contribution from a non-conference participant during a conference. In some embodiments, this interface to may include a mobile application ("app") or other software executable on a mobile computing device (e.g. a smart phone). It is understood that any mobile computing device of this disclosure can be configured to communicate with one or more servers. In another embodiment, the interface may include a web-based application accessible through a browser or other software, or a desktop application. The app can be configured to provide or support functionality of this disclosure.

According to certain embodiments, the one or more servers of the herein disclosed system (e.g., conference server 12), can each be connected directly or wirelessly (e.g., 3G/4G/5G, RF, a local wireless network, and/or the like). The server(s) can be operatively connected to one or more web servers across one or more networks, each server operable to permanently store and/or continuously update a database of master data. Servers of this disclosure can include back-end architecture with, or be in communication with, one or more of database server(s), whereby functionality of the system may be split between multiple servers, which may be provided by one or more discrete providers. In an example embodiment, the database server may store master data as well as logging and trace information. Software of the database server may be based on the object-relational database system PostgresSQL the database server is not so limited other approaches may be used as needed or required. This database server is not limited to only organizing and storing data and instead, it may be also used to eliminate a need of having an application server (e.g., 2nd Layer). In some embodiments, almost every functional requirement may be realized by using the database's programming language, PL/pgSQL. The database may also provide an API to the web server for data interchange based on JSON specifications. In some embodiments, the database server may also directly interact with the described functionality of respective computing devices.

In some examples, a computer system of this disclosure can be capable of implementing aspects of the present disclosure in accordance with one or more embodiments described herein, including those examples shown in FIGS. 1-4. It should be appreciated that any computer system of examples of this disclosure may be implemented within a single computing device or a computing system formed with multiple connected computing devices. The computer system of this disclosure may be configured to perform various distributed computing tasks, in which processing and/or storage resources may be distributed among the multiple devices.

In some examples, the computer system can include a processing unit ("CPU"), a system memory, and a system bus that couples the memory to the CPU. The computer system further includes a mass storage device for storing program modules. The program modules may be operable to analyze data from any herein disclosed data feeds, databases, classify user states based on the data feeds, determine responsive actions, and/or control any related operations. The program modules may include an application for performing data acquisition and/or processing functions as described herein. In some examples, the mass storage device can be connected to the CPU through a mass storage controller connected to the bus. The mass storage device and its associated computer-storage media provide non-volatile storage for the computer system. Although the description of computer-storage media contained herein refers to a mass storage device, such as a hard disk or CD-ROM drive, it should be appreciated by those skilled in the art that computer-storage media can be any available computer storage media that can be accessed by the computer system.

By way of example and not limitation, computer storage media (also referred to herein as "computer-readable storage medium" or "computer-readable storage media") may include volatile and non-volatile, removable and non-removable media implemented in any method or technology for storage of information such as computer-storage instructions, data structures, program modules, or other data. For example, computer storage media includes, but is not limited to, RAM, ROM, EPROM, EEPROM, flash memory or other solid state memory technology, CD-ROM, digital versatile disks ("DVD"), HD-DVD, BLU-RAY, or other optical storage, magnetic cassettes, magnetic tape, magnetic disk storage or other magnetic storage devices, or any other medium which can be used to store the desired information and which can be accessed by the computer system. "Computer storage media", "computer-readable storage medium" or "computer-readable storage media" as described herein do not include transitory signals.

According to various embodiments, the computer system may operate in a networked environment using connections to other local or remote computers through a network via a network interface unit connected to the bus. The network interface unit may facilitate connection of the computing device inputs and outputs to one or more suitable networks and/or connections such as a local area network (LAN), a wide area network (WAN), the Internet, a cellular network, a radio frequency (RF) network, a Bluetooth-enabled network, a Wi-Fi enabled network, a satellite-based network, or other wired and/or wireless networks for communication with external devices and/or systems.

In some examples, the computer system may also include an input/output controller for receiving and processing input from any of a number of input devices. Input devices may include one or more of keyboards, mice, stylus, touchscreens, microphones, audio capturing devices, and image/video capturing devices. An end user may utilize the input devices to interact with a user interface, for example a graphical user interface, for managing various functions performed by the computer system. The bus may enable the processing unit to read code and/or data to/from the mass storage device or other computer-storage media.

In some examples, the computer-storage media may represent apparatus in the form of storage elements that are implemented using any suitable technology, including but not limited to semiconductors, magnetic materials, optics, or the like. The computer-storage media may represent memory components, whether characterized as RAM, ROM, flash, or other types of technology. The computer storage media may also represent secondary storage, whether implemented as hard drives or otherwise. Hard drive implementations may be characterized as solid state or may include rotating media storing magnetically-encoded information. The program modules, which include the data feed application, may include instructions that, when loaded into the processing unit and executed, cause the computer system to provide functions associated with one or more embodiments illustrated in the figures of this disclosure. The program modules may also provide various tools or techniques by which the computer system may participate within the overall systems or operating environments using the components, flows, and data structures discussed throughout this description.

In some examples, the program modules may, when loaded into the processing unit and executed, transform the processing unit and the overall computer system from a general-purpose computing system into a special-purpose computing system. The processing unit may be constructed from any number of transistors or other discrete circuit elements, which may individually or collectively assume any number of states. More specifically, the processing unit may operate as a finite-state machine, in response to executable instructions contained within the program modules. These computer-executable instructions may transform the processing unit by specifying how the processing unit transitions between states, thereby transforming the transistors or other discrete hardware elements constituting the processing unit.

Encoding the program modules may also transform the physical structure of the computer-storage media. The specific transformation of physical structure may depend on various factors, in different implementations of this description. Examples of such factors may include but are not limited to the technology used to implement the computer-storage media, whether the computer storage media are characterized as primary or secondary storage, and the like. For example, if the computer storage media are implemented as semiconductor-based memory, the program modules may transform the physical state of the semiconductor memory, when the software is encoded therein. For example, the program modules may transform the state of transistors, capacitors, or other discrete circuit elements constituting the semiconductor memory.

As another example, the computer storage media may be implemented using magnetic or optical technology. In such implementations, the program modules may transform the physical state of magnetic or optical media, when the software is encoded therein. These transformations may include altering the magnetic characteristics of particular locations within given magnetic media. These transformations may also include altering the physical features or characteristics of particular locations within given optical media, to change the optical characteristics of those locations. Other transformations of physical media are possible without departing from the scope of the present description, with the foregoing examples provided only to facilitate this discussion.

In some examples, the systems and methods of this disclosure can be used in online meetings and webinars. In some examples, once a user declines an invitation, input of this non-conference participant (e.g., "his questions for the town hall" in text or voice) can be processed by the system in real-time. In some aspects, systems and methods of this disclosure can be extended to online conferencing. For example and without limitation, if there is a planned conference, then if someone is not able to join the meetings that user can convey their message in text and voice format. Advantageously, the herein disclosed systems and methods of this disclosure can increase participant engagement by ensuring that insights of non-attending participants to a meeting are preserved and dynamically integrated into live meetings during a relevant topic using a topic-tracking and in-meeting delivery mechanism. Further, the systems and methods of this disclosure allow for absent users to participate, moving beyond the expectation of 100% attendance unconditionally, or not being able to contribute.

The features of the various embodiments may be stand alone or combined in any combination. Further, unless otherwise noted, various illustrated steps of a method can be performed sequentially or at the same time, and not necessarily be performed in the order illustrated. It will be recognized that changes and modifications may be made to the exemplary embodiments without departing from the scope of the present invention. These and other changes or modifications are intended to be included within the scope of the present invention, as expressed in the following claims.

The present invention has been described above with reference to a number of exemplary embodiments and examples. It should be appreciated that the particular embodiments shown and described herein are illustrative of the invention and its best mode and are not intended to limit in any way the scope of the invention as set forth in the claims. The features of the various embodiments may stand alone or be combined in any combination. Further, unless otherwise noted, various illustrated steps of a method can be performed sequentially or at the same time, and not necessarily be performed in the order illustrated. It will be recognized that changes and modifications may be made to the exemplary embodiments without departing from the scope of the present invention. These and other changes or modifications are intended to be included within the scope of the present invention, as expressed in the following claims.

## Claims

1. A computerized conferencing system configured to integrate a live contribution from a non-conference participant during a conference, wherein the system comprises:
a conference server configured to send a conference invitation to a plurality of participant devices, wherein the conference invitation includes conference topics, wherein each of the plurality of participant devices is assigned to a unique participant and is configured to receive the conference invitation from the conference server and send a response thereto, and wherein if the response declines participation in the conference, the response includes (a) a reason for the non-conference participant declining the conference invitation, and (b) a voice, video, image, or text input from the non-conference participant related to the conference;
a topic identifier configured to identify a conference topic during the conference;
an input database configured to store the reason for declining the conference invitation by the non-conference participant and the non-conference participant's input, wherein the input database is in communication with the conference server and with the topic identifier; and
a natural language processor (NLP) in communication with the conference server and the topic identifier, wherein the topic identifier determines a topic presented in the conference based on an NLP identification of thematic elements in a conference participant's speech, a host's speech, and/or conference audio;
wherein when a topic is identified by the topic identifier to which the input pertains, the input is retrieved from the input database by the conference server and presented with the topic.

2. The computerized conferencing system of claim 1, wherein the non-conference participant's decline of the conference invitation and reason for the decline are immediately communicated to each of the other participant devices prior to the conference.

3. The computerized conferencing system of claim 1 or claim 2 that further includes a bot server in communication with the conference server and with the input database and that is configured to generate a bot in the conference to present the input if the input is audio or video and optionally wherein the computerized conferencing system further includes a deep fake server in communication with the bot server, wherein the deep fake server stores the voice or image of the non-conference participant and the bot server is configured to retrieve the voice or image of the non-conference participant and present the input using the voice and/or image of the non-conference participant.

4. The computerized conferencing system of any preceding claim, that further includes a host device in communication with the conference server and using the host device, the conference host controls when and if the input is presented during the conference and/or wherein the conference server is configured to annotate or line the input to the topic of the conference to which the input pertains so the input is integrated into other materials related to the topic when the topic is presented rather than the input being presented separately.

5. The computerized conferencing system of any preceding claim, wherein conference participants can provide feedback on the input when it is presented, and the feedback is stored in the input database where it is accessible by the non-conference participant via a participant device and optionally wherein the non-conference participant receives an alert of the feedback on the participant device and, using the participant device, may respond to a participant device of the conference participant who provided the feedback or join the conference to provide a response to the feedback.

6. The computerized conferencing system of any preceding claim, wherein one or both of the NLP and the topic identifier are further configured to identify synonymous and semantically similar (a) words, and (b) phrases to words and phrases included in the participants' speech, the host's speech, or conference audio to assist in identifying the topic.

7. The computerized conferencing system of claim 6, that further comprises a predictive module for dynamically adjusting the NLP identifications and the topic identifier in real-time, based on predictive analytics and an evolving flow of the participants' speech, the host's speech, or conference audio, to further enhance topic detection during the conference.

8. The computerized conferencing system of claim 6, that further includes a filter in communication with the conference server and the filter is configured to filter text or audio in the input by the text or audio (a) being tokenized into individual words or phrases, (b) having common stop words removed, (c) parsing text, and (d) fragmenting sentences, and the filtered text or audio is compared to the participant's speech, the host's speech, or the conference audio during the conference.

9. A computerized conferencing method for permitting a non-conference participant to provide a live contribution to a conference topic during a conference, the computerized conferencing method comprising the following steps:
a conference server sending a conference invitation to a plurality of participant devices, wherein the conference invitation includes conference topics, and wherein each of the plurality of participant devices is assigned to a unique participant;
using a participant device, one of the participants sending a response to the conference server declining the conference invitation, wherein the response includes (a) a reason for the one of the participants declining the conference invitation, and (b) a voice, video, image, or text input regarding the conference;
an input database storing the reason for the one of the participants declining the conference invitation and the input, wherein the input database is in communication with the conference server and with a topic identifier;
using an NLP, determining one or more topics presented during a conference by NLP identifying words and phrases in a conference participant's speech, a host's speech, or conference audio, and communicating with the input database to access the input and compare the input to the identified words and phrases; and
based on a comparison, a topic identifier matching a conference topic to the input and the conference server accessing the input and presenting it during the conference topic.

10. The computerized conferencing method of claim 9, wherein (a) the NLP processes conference audio to tokenize it into individual words and phrases, wherein words are lemmatized for semantic consistency, and (b) the conference server processes conference text to parse and fragment sentences for analysis, and (c) the processed conference audio and processed text are compared to the input to determine matches and identify a topic that matches the input.

11. The computerized conferencing method of claim 9 or claim 10 that further includes a camera in communication with the conference server and the conference server is also configured to analyze video and images generated during the conference and compare them to video and images in the input database to help identify a conference topic related to the input.

12. The computerized conferencing method of any of claims 9 to 11, wherein the topic identifier further identifies the topic based upon (a) an identity of a person speaking, (b) keywords identified by the NLP, (c) a predetermined timeframe within the conference for the topic, and (d) a conference image.

13. The computerized conferencing method of any of claims 9 to 12, wherein the conference server accesses the input database and retrieves and presents stored input when a conference topic having a predetermined score criteria is identified by the topic identifier and /or wherein the conference topic and the input are stored together in the input database when the conference topic is concluded and the conference topic and input can be accessed by non-conference participants and by conference participants.

14. A computerized conferencing device for presenting live content from a non-conference participant during a conference, wherein the device comprises:
a tangible, non-transitory memory configured to communicate with a processor of the computerized conferencing device, wherein the tangible, non-transitory memory comprises instructions stored thereon that, in response to execution by the processor, cause the device to:
send, via a conference server, a conference invitation to a plurality of participant devices, wherein the conference invitation includes conference topics, and wherein each of the participant devices is assigned to a unique participant;
a non-conference participant, using a participant device, sending a response to the conference server declining a conference invitation, wherein the response includes (a) a reason for declining the conference invitation, and (b) input related to the conference, wherein the input comprises of one or more of audio, visual, images, and text;
the reason for declining the conference and the input being stored in an input database;
identify, utilizing an NLP in communication with a topic identifier and the conference server, a topic in a conference presented by the conference server based on thematic elements in a conference participant's speech, a host's speech, or conference audio;
the topic identifier comparing the topic to the input in the input database to determine whether there is a match; and
if there is a match, utilizing the conference server, retrieving input from the input database when the topic related to the input is identified and providing the input during presentation of the topic.

15. The computerized conferencing device of claim 14, wherein the tangible, non-transitory memory instructions when executed further cause the device to:
using a topic scoring engine in communication with the topic identifier, identifying a topic relevant to the input based on a predetermined score criteria saved in the topic scoring engine, wherein the score criteria is based on a number of matches of words and phrases in a selected segment of conference audio, participant speech, host speech, and conference video, to audio, text, video, and images in a selected segment of the input; and
the conference server either (a) presenting the input once during the conference when the predetermined score is reached, or (b) presenting the input during the conference each time the predetermined score is reached and optionally wherein a host communicates the predetermined score criteria through a conference host device to the conference server, which transmits the predetermined score criteria to the topic identifier.
